# EUROPEAN PATENT SPECIFICATION

(11) **EP 2 412 688 B1**
(45) Date of publication and mention of the grant of the patent: **11.05.2016**
(21) Application number: 11171221.2
(22) Date of filing: 23.06.2011
(51) Int. Cl.: C04B 28/02, C04B 7/24, C04B 14/40, B09B 3/00

(54) **Method for obtaining a concrete mixture comprising thermally inactivated cement-asbestos**
Verfahren zur Herstellung eines thermisch inaktivierten Asbestzement enthaltende Betonmischung
Méthode de préparation d'un mélange de béton comprenant un ciment d'amiante inactivé thermiquement

(30) Priority: 24.06.2010 IT MO20100190
(43) Date of publication of application: 01.02.2012
(73) Proprietor: Zetadi S.r.l., 21010 Ferno (IT); ERRE GROUP S.R.L. Socio Unico, 21015 Lonate Pozzolo (IT)
(72) Inventor: Gualtieri, Alessandro Francesco, 41051 Castelnuovo Rangone (MO) (IT); Boccaletti, Marco, 42047 Rolo (RE) (IT); Zanatto, Ivano, 28047 Oleggio (NO) (IT)
(74) Representative: Crugnola, Pietro

(56) References cited:
- EP-A1- 0 545 850
- EP-A1- 1 277 527
- WO-A1-2007/048881
- DE-A1- 4 411 324
- DE-A1- 19 517 595
- GB-A- 1 274 665
- JP-A- 2006 342 037
- DATABASE WPI Week 198740 Thomson Scientific, London, GB; AN 1987-283633 XP002629662, SHURYGIN, V.P.; ET AL: "concrete mix for producing centrifuged articles", -& SU 1 296 541 A (ROST ENG CONS INST) 15 March 1987 (1987-03-15)

## Description

The invention relates to a **method for obtaining a** concrete mixture comprising thermally inactivated asbestos cement.

The commercial name asbestos indicates the minerals belonging to the asbestos family, silicates in the form of asbestosfibre aggregates. The following minerals are covered by the definition of asbestos according to the Italian standards: chrysotile (serpentine asbestos), tremolite, actinolite, anthophyllite, amosite and crocidolite (amphibole asbestos).

The crystalline fibrous asbestos form that determines the exceptional technological properties of asbestos is unfortunately also the cause of the proven toxicity of asbestos. The extremely fine fibres (they are nanometric in diameter and micrometric in length) can be both free/slightly bound and tightly bound. In the former case we talk of asbestos in friable matrix, for example sprayed asbestos or asbestos in flakes (flaked), but in the latter case we talk of asbestos in compact matrix, asbestos cement (known by the commercial name Eternit) being the most famous representative. Human activities, smog, acid rains, the temperature variations, UV rays, the action of wind, vibrations, both single and combined, cause erosion of the encasing matrix that favours the release of asbestos fibres.

If dispersed in the air, the fibres can be inhaled and may reach the lungs where, even after very long incubation periods, they may cause diseases that are nearly always mortal. It is, today, in fact scientifically proved that inhaling asbestos fibres can severely damage the respiratory tract and develops asbestosis, mesothelioma or pulmonary carcinoma. At present, no scientific study exists that defines the minimum level of exposure to the fibres that is necessary for triggering an asbestos-related disease. This means that, at least theoretically, inhaling just a few fibres (environmental exposure) may be extremely hazardous.

For these reasons, the extraction, import, export, marketing and production of asbestos, asbestos products or products containing asbestos are forbidden by law in many countries, for example Italy since 1992. Although materials containing asbestos have been banned, in Italia, for 18 years, there are still today about 2 billion square metres of asbestos concrete covering in Italy, 300 million square metres of friable asbestos and about 150 million square metres of products of various types such as joints, brake linings and clutches.

In order to address this real emergency, making safe sites with products containing deteriorated asbestos has become a legal obligation. The most common method for making the covers safe is to remove the slabs, combined with disposal in a controlled landfill site for hazardous waste or for non-hazardous waste with a dedicated cell. In Italy, the landfill sites that can receive this type of waste are very few and public or private bodies encounter great resistance to the opening of new landfill sites. This is because there is scientific proof that a site for the disposal of waste containing asbestos is not a completely closed system, or at least is completely closed only over the medium term (1-10 years) . If it is considered that the phases of the asbestos at ambient temperature can persist for a very long time, this may be a serious problem. Over the short term, landfill sites show themselves to be possible sources of emissions because, if the packs of slabs of materials containing asbestos are possibly damaged and shattered when they are deposited, they may release fibres that concentrate in the air. Over the long term (over 10 years), the problem remains. It is considered that on a landfill site, over the long period, there is no coating system, however well designed and built, that can prevent all filtration leaks. Factors that determine the formation of open discontinuities that may allow unaltered leached material to escape over many kilometres are fissuring through drying and differential subsidence. The leached material may contain suspended particles even in large quantities. If these particles are not filtered, they enter the phreatic zone of the land, mix and move with the groundwater. As asbestos is virtually indestructible at ambient temperature, it can concentrate in the percolate and, if it is not filtered, can reach the groundwater. Analyses conducted on the percolates of landfill sites in which items containing asbestos were deposited have establishes a significant number of asbestos fibres in said percolates.

This situation is due to the structural degeneration of the packaging that contain the waste, caused by wear over time and by the conditions of deterioration that occur in the body of the landfill site after burying. Asbestos in water is in itself harmless but following evaporation can be concentrated on the surface ground and atmospheric agents (mainly wind) can make the asbestos return to be dispersed in the air.

Modern technologies today provide a definitive, alternative solution to burial in landfill sites. In fact, it is proven that via thermal, mechanical or chemical treatment it is possible to transform and destroy asbestos fibres. The thermal transformation (complete destruction of the crystal lattice) is achieved by the action of the heat that enables the fibrous asbestos to be transformed into other silicates that are non-fibrous and harmless to human health.

The main transformations that occur at high temperature in materials containing asbestos can be classified as deoxidation and recrystallisation in solid state. The thermal treatment of chrysotile, the main component of the asbestos cement, shows that at about 800 °C a transformation in solid state begins that leads to the complete recrystallisation in magnesium silicate (forsterite and enstatite) phases:

*Mg₃*(*OH*)*Si₂O₅* ⇒ *Mg₂SiO₄ (forsterite)* + *MgSiO₃ (enstatite)* + *2H₂O*

Owing to this transformation, the chrysotile no longer exists as a mineralogical entity. The original chemical and physical properties of the transformed material are lost and it is consequeritly no longer dangerous.

In addition to the chrysotile, amphibole crocidolite asbestos can be present as a secondary phase in the asbestos cement.

If this hazardous mineral is treated thermally at temperatures above 1050 °C, after deoxidation, it shows a complex crystallisation sequence, with oxidation of bivalent iron:

*Na₂MgFe''₂Fe'''₂Si₈O₂₂*(*OH*)*₂* ⇒ *2NaFe'''Si₂O₆ (alkaline pyroxene)* + *MgSiO₃ (enstatite) + Fe₂O₃ (haematite)* + *3SiO₂ (cristobalite) + H₂O*

The specific literature, clearly shows that asbestos as such or present in compact materials (asbestos clement) if properly heated, modifies the crystalline system and loses the asbestos fibre cladding through transformation into other non-fibrous and inert silicates.

The thermal transformation (recrystallisation) of the fibrous mineral also leads to the definitive elimination of the potential danger of these materials. Recently, the use of secondary raw material deriving from the thermal transformation of asbestos was permitted. This opens a new road for the definitive solution of the problem of asbestos inasmuch as it enables inactivation plants to be made that are able to ensure the total reliability of the effective transformation of asbestos cement in an inert and recyclable compound. The thermal transformation product is recyclable as a secondary raw material, according to recent directives of the European Union, provided that it does not contain asbestos and/or substances classified as category 1 or 2 cancerogenous substances in a total concentration above 0.1%.

From IT0001368771 an innovative industrial process for the definitive solution of the asbestos problem is known. The process, which is unique in the world in terms of type of thermal treatment and technological properties, is based on the chemical-crystalline conversion of waste containing asbestos. This permits the direct thermal transformation of slabs of asbestos cement, friable asbestos and/or glass/rock wool sealed in packages of plastics, deriving from normal reclamation and removal operations. The process of direct thermal transformation of the entire package is possible owing to a continuous industrial tunnel kiln. The firing cycle to obtain the complete transformation of the asbestos phases (both serpentine and amphibole) contained in the slabs of asbestos cement in inert phases (calcium silicates, aluminium, magnesium and iron), involves permanency to a temperature comprised between 1200 and 1300 °C for very long periods. One of the particularities of the process is that it does not involve handling and/or grinding sealed packages of asbestos before firing. The industrial kiln ensures complete isolation of the material being fired from the external environment and is provided with a post-combustion system, through which all the fumes deriving from the process of transforming the waste and the package have to pass. The fumes coming from the after-burner are cooled and further have to pass through a double system of absolute HEPA filters and a scrubber.

It is further known from IT0001256029 that it is possible to directly use non-inactivated raw asbestos cement to prepare concrete by adding the asbestos cement directly to the mixture of natural raw materials and which are not intended for the production of clinker (production of clinker at 1350-1400 °C). The use of non-inactivated asbestos cement to produce concrete includes the risk of dispersion of asbestos in the environment, in the event of degradation of the concrete products in which the non-inactivated asbestos cement has been used.

It is further known from SU1296541 that addition of asbestos cement waste (I) to the concrete mixture, improves the properties of the concrete. The mixture contains (in wt. %) : cement 22,04-22,13, dense gravel 53,06-53,28, dense sand 16,36-16,82, (I) 0,08-0,2 and water the rest and the articles are steamed for 3 + 9 + 3 hours at 90°.

Finally, it is known from EP1277527 a method of converting asbestos cement products such as waste into asbestos free cement products that involves placing the initial product as pieces in a tunnel oven at a preset temperature of between six hundred and one thousand degrees for drying the asbestos fibres. This is followed by mechanical comminuting to produce a secondary raw material without asbestos for the cement industry.

The object of the present invention is to make it possible to use asbestos cement without risks to make concrete.

The object of the present invention is achieved with **a method for obtaining a concrete mixture** according to claim 1.

Owing to the invention, it is possible to use the secondary raw material produced by the thermal transformation (inactivation) of slabs of asbestos cement to obtain a concrete mixture having properties of resistance to compression, resistance to flexure and penetration depth of the water, which, on the basis of current legislation, makes the secondary raw material suitable for being used interiors of buildings with low humidity, for non-reinforced concrete products sunken into a non-corrosive ground or into non-corrosive water, for non-reinforced concrete products subject to wet-dry cycles but not subject to abrasion, ice or chemical attack, for parts of structures containing liquids, for foundations of buildings.

The use of said secondary raw material further eliminates any risk of dispersion of asbestos into the environment.

An example of implementation of the invention is disclosed below merely by way of non-limiting example.

The secondary raw material that is usable according to the present invention is produced following thermal transformation of slabs of asbestos cement in both continuous and discontinuous industrial kilns operating in rapid cycles (firing time below 2 h, including the ascent ramp to firing temperature, isothermal phase at the firing temperature, and cooling) or slow (total firing time between 2 and 50 h, including the ascent ramp to the firing temperature, isothermal phase at the firing temperature, and cooling). The maximum treatment temperature must be comprised between 1050 and 1300 °C in such a manner as to obtain the complete transformation of the asbestos phases (both serpentine asbestos and amphibole asbestos) into silicate calcium, aluminium and magnesium phases (such as, for example, larnite 2CaO·SiO₂, gehlenite Ca₂Al(AlSi)O₇, merwinite Ca₃Mg (SiO₄) ₂, ferrite 4CaO·Al₂O_{3·}Fe₂O₃ and/or into an amorphous phase based on Ca, Mg, Fe, Al, Si and oxygen).

The average chemical composition of the secondary raw material obtained with the aforesaid thermal treatment, expressed as a. weight percentage of oxides of the main elements is as follows:
SiO₂ = 25-40%
Al₂O₃ = 2-8%
Fe₂O₃ = 0-5%
TiO₂ = 0-2%
CaO = 35-60%
MgO = 2-10%
Na₂O = 0-3%
K₂O = 0-3%
(volatile) loss on ignition = 0-5%.

The secondary raw material is recycled in a percentage comprised between 1 and 20 % replacing commercial clinker to formulate concrete mixtures.

The average chemical composition of commercial clinker expressed as a weight percentage of oxides of the main elements is as follows:
SiO₂ = 15-30%
Al₂O₃ = 2-10%
Fe₂O₃ = 0-6%
TiO₂ = 0-2%
CaO = 45-68%
MgO = 0-5%
Na₂O = 0-3%
K₂O = 0-3%
(volatile) loss on ignition = 0-10%

The concrete mixture **obtained by implementing the method** according to the invention consists of cement binder in a fraction comprised between 14 and 18% and inert (sand + gravel) in a fraction comprised between 82 and 86% and water/cement binder ratio = 0.55-0.61. 80-99% of the cement binder consists of commercial clinker and 1-20% of the secondary raw material obtained from the thermal transformation (inactivation) of slabs of asbestos cement.

In view of the technological properties of resistance to compression above 20 N/mm², resistance to flexure above 2.5 N/mm², and penetration depth of the water below 4 cm, the concrete mixture **obtained by implementing the method** according to the invention containing the secondary raw material produced by thermal transformation (inactivation) of slabs of asbestos cement is usable according to current legislation to make:
- interiors of buildings with low humidity,
- non-reinforced concrete products sunken in non-corrosive ground or non-corrosive water,
- non-reinforced concrete products subject to wet-dry cycles and not subject to abrasion, ice or chemical attack;
- parts of structures containing liquid, foundations.

The aforesaid values of resistance to compression, resistance to flexure and penetration depth of water, are measured in products made with the mixture according to the invention, after at least twenty-eight days from the manufacture of the products.

The inventors of this patent application consider that this industrial application of the secondary raw material produced by thermal transformation (inactivation) of slabs of asbestos cement is an absolute innovation because it is not comprised in the prior art and is not clear from the prior art for those who are skilled in this field of research. The application can also be the object of immediate use in the industrial field.

## Claims

1. A method for obtaining a concrete mixture comprising cement binder in a quantity comprised between 14 and 18% in weight and inert materials, such as sand and gravel, in a quantity comprised between 82 and 86% in weight, **characterised in that** it comprises the following steps:
- providing a secondary raw material by thermally inactivating asbestos cement;
- using said raw material to provide a cement binder comprising clinker in a quantity comprised between 80% and 99% in weight and said secondary raw material in a quantity comprised between 1% and 20% in weight, a water/cement binder ratio being comprised between 0.55 and 0.61.

2. A method according to claim 1, wherein the composition of said secondary raw material expressed as percentages in weight of oxides of the main components is as follows:
SiO₂ = 25-40%
Al₂O₃ = 2-8%
Fe₂O₃ = 0-5%
TiO₂ = 0-2%
CaO = 35-60%
MgO = 2-10%
Na₂O = 0-3%
K₂O = 0-3%
Volatile materials = 0-5%.

3. A method according to claim 1, or 2, wherein the composition of said clinker, expressed as percentages in weight of oxides of the main components is as follows:
SiO₂ = 15-30%
Al₂O₃ = 2-10%
Fe₂O₃ = 0-6%
TiO₂ = 0-2%
CaO = 45-68%
MgO = 0-5%
Na₂O = 0-3%
K₂O = 0-3%
Volatile materials = 0-10%.

4. A method according to any preceding claim, **characterised in that** concrete products obtained with said mixture have, after at least twenty-eight days from manufacture thereof, the following properties:
- resistance to compression greater than 20 N/mm²;
- resistance to flexure greater than 2.5 N/mm²,
- penetration depth of water less than 4 cm.

5. A method according to any preceding claim, wherein said secondary raw material is produced by thermal treatment of slabs of asbestos cement at a temperature comprised between 1050 and 1300°C, for a time comprised between 2 hours and 50 hours.

## Patentansprüche

1. Verfahren zum Erhalten einer Betonmischung, die Folgendes aufweist, nämlich ein Zementbindemittel in einer Menge, die bei 14 bis 18 Gew.-% liegt, und inerte Materialien, wie beispielsweise Sand und Kies, in einer Menge, die bei 82 bis 86 Gew.-% liegt, **dadurch gekennzeichnet, dass** es die folgenden Schritte umfasst:
- Bereitstellen eines Sekundärrohmaterials durch thermisches Inaktivieren von Asbestzement;
- Verwenden des Rohmaterials, um ein Zementbindemittel bereitzustellen, das Folgendes aufweist, nämlich Klinker in einer Menge, die bei 80 bis 99 Gew.-% liegt, und das Sekundärrohmaterial in einer Menge, die bei 1 bis 20 Gew.-% liegt, wobei das Wasser/Zementbindemittel-Verhältnis bei 0,55 bis 0,61 liegt.

2. Verfahren gemäß Anspruch 1, wobei die Zusammensetzung des Sekundärrohmaterials, ausgedrückt in prozentualen Gewichtsanteilen der Oxide der Hauptkomponenten, die Folgende ist:
SiO₂ = 25 - 40 %
Al₂O₃ = 2 - 8 %
Fe₂O₃ = 0 - 5 %
TiO₂ = 0 - 2 %
CaO = 35 - 60 %
MgO = 2-10%
Na₂O = 0 - 3 %
K₂O = 0 - 3 %
Flüchtige Materialien = 0 - 5 %.

3. Verfahren gemäß Anspruch 1 oder 2, wobei die Zusammensetzung des Klinkers, ausgedrückt in prozentualen Gewichtsanteilen der Oxide der Hauptkomponenten, die Folgende ist:
SiO₂ = 15 - 30 %
Al₂O₃ = 2 - 10 %
Fe₂O₃ = 0 - 6 %
TiO₂ = 0 - 2 %
CaO = 45 - 68 %
MgO = 0-5%
Na₂O = 0 - 3 %
K₂O = 0 - 3 %
Flüchtige Materialien = 0 - 10 %.

4. Verfahren gemäß einem der vorherigen Ansprüche, **dadurch gekennzeichnet, dass** die Betonprodukte, die mit der Mischung erhalten werden, zumindest achtundzwanzig Tage nach deren Herstellung die folgenden Eigenschaften aufweisen:
- Druckfestigkeit von größer als 20 N/mm²;
- Biegefestigkeit von größer als 2,5 N/mm²,
- Wassereindringtiefe von weniger als 4 cm.

5. Verfahren gemäß einem der vorherigen Ansprüche, wobei das Sekundärrohmaterial durch thermale Behandlung von Brammen des Asbestzements bei einer Temperatur, die bei 1050 bis 1300°C liegt, und für eine Zeit, die bei 2 Stunden bis 50 Stunden liegt, hergestellt wird.

## Revendications

1. Procédé d'obtention d'un mélange de béton comprenant un liant cimentaire dans une quantité comprise entre 14 et 18% du poids et des matériaux inertes, tels que du sable et du gravier, dans une quantité comprise entre 82 et 86% du poids, **caractérisé en ce qu**'il comprend les étapes suivantes :
- obtenir une matière première secondaire en inactivant thermiquement de l'amiante-ciment ;
- utiliser ladite matière première pour obtenir un liant cimentaire comprenant du clinker dans une quantité comprise entre 80% et 99% du poids et ladite matière première secondaire dans une quantité comprise entre 1 % et 20% du poids, un rapport eau/liant cimentaire étant compris entre 0,55 et 0,61.

2. Procédé selon la revendication 1, dans lequel la composition de ladite matière première secondaire exprimée en pourcentages du poids d'oxydes des principaux composants est la suivante :
SiO₂ = 25-40%
Al₂O₃ = 2-8%
Fe₂O₃ = 0-5%
TiO₂ = 0-2%
CaO = 35-60%
MgO = 2-10%
Na₂O = 0-3%
K₂O = 0-3%
Matières volatiles = 0-5%.

3. Procédé selon la revendication 1, ou 2, dans lequel la composition dudit clinker, exprimée en pourcentages du poids d'oxydes des principaux composants est la suivante :
SiO₂ = 15-30%
Al₂O₃ = 2-10%
Fe₂O₃ = 0-6%
TiO₂ = 0-2%
CaO = 45-68%
MgO = 0-5%
Na₂O = 0-3%
K₂O = 0-3%
Matières volatiles = 0-10%.

4. Procédé selon l'une quelconque des revendications précédentes, **caractérisé en ce que** les produits en béton obtenus avec ledit mélange ont, après au moins vingt-huit jours depuis leur fabrication, les propriétés suivantes :
- résistance à la compression supérieure à 20 N/mm² ;
- résistance à la flexion supérieure à 2,5 N/mm²,
- profondeur de pénétration de l'eau inférieure à 4 cm.

5. Procédé selon l'une quelconque des revendications précédentes, dans lequel ladite matière première secondaire est obtenue par le traitement thermique de dalles d'amiante-ciment à une température comprise entre 1050 et 1300°C, pendant une durée comprise entre 2 heures et 50 heures.
